# EUROPEAN PATENT SPECIFICATION

(11) **EP 2 092 815 B1**
(45) Date of publication and mention of the grant of the patent: **07.11.2012**
(21) Application number: 09161714.2
(22) Date of filing: 05.10.2007
(51) Int. Cl.: A01B 59/042, B60D 1/02, B60D 1/06, B60D 1/07, B60D 1/46, B60D 1/52

(54) **Tractor draw bar arrangement**
Anhängekupplung für einenTraktor
Barre d'attelage pour tracteur

(30) Priority: 21.10.2006 GB 0620996
(43) Date of publication of application: 26.08.2009
(62) Divisional of application: 07019504.5
(73) Proprietor: Agco SA, 60026 Beauvais (FR)
(72) Inventor: Baudoin, Mathieu Joel, 60000, Beauvais (FR); Deschodt, Thomas Andre Micheal, 59492, Hoymille (FR); Rateau, Clement Olivier, 60480, Francastel (FR)
(74) Representative: Morrall, Roger

(56) References cited:
- EP-A- 0 485 296
- DE-A1- 4 427 399
- FR-A- 2 729 816
- GB-A- 2 170 769
- US-A1- 2004 155 430

## Description

This invention relates to a draw bar arrangement comprising a draw bar support means for attachment to a tractor, and a draw bar secured to the draw bar support means to extend in a generally fore and aft direction relative to the tractor.

DE-4,427,399 discloses a draw bar arrangement comprising a draw bar support means pivotally attached to the underside of a tractor. The draw bar support means comprises a channel member to which the drawbar is secured by means of a pin and which is slideable within the support means by a cylinder. Access to the pin to remove the drawbar is provided by lowering of the support means.

GB-2,170,769 discloses a coupling mechanism for a tractor and trailer combination in which a drawbar is releasably connected to a trailer coupling member by means of an automatic coupling device comprising a pin engageable in a aperture in the drawbar.

In accordance with the present invention there is provided a drawbar arrangement comprising a draw bar support means secured to a tractor, and a draw bar secured to the support means to extend in a generally fore and aft direction relative to the tractor, the draw bar being secured to the support means by a latch or pin which engages an aperture in the draw bar, characterised in that the latch or pin is withdrawable from the aperture by a cam means which is moved by a handle located rearwardly of the aperture and accessible from the rear of the tractor.

There may be provided a rear hitch for a tractor comprising a pair of vertically extending and laterally spaced rails designed to be secured to the rear of the tractor and an implement connector secured between the rails for the attachment of an implement, the hitch being characterised in that the rails are also adapted to support one or more non-operative implement connectors.

Such a rear hitch thus enables a tractor to easily transport several implement connectors in a secure manner when they are non-operative.

A connector may comprise a ball, pin or other formation mounted on a plate designed to be supported between the rails with the plate in a generally horizontal orientation when in use.

The rails may conveniently be provided with one or more pairs of slots into which the plates of non-operative connectors can be inserted for storage on the hitch. The rails are preferably provided with the pair of generally horizontally extending upwardly facing support surfaces to vertically support end portions of the plate of an operative connector, and interengaging formations are provided on the plate and carried by the rails to support the plate against horizontal movement and tipping movement relative to the support surfaces when the ball, pin or other formation on the plate is in use.

The interengaging formations may conveniently comprise vertically upwardly extending projections on the support surfaces which engage cut-outs in the ends of the plate to support the plate against horizontal movement relative to the support surfaces, and vertically downwardly extending projections located and above and spaced from the support surfaces to receive the plate between the support surfaces and the lower ends of the vertically downwardly extending projections to control tipping of the plate relative to the support surfaces.

A draw bar support means may be at least partially supported from the rails with a draw bar extending in the generally fore and aft direction, the draw bar being secured to the support means by a latch or pin which engages an aperture in the draw bar, the latch or pin being withdrawable from the aperture by movement of a handle accessible from the rear of the hitch.

The draw bar support means preferably carries a keeper to hold any implement connected with the ball, pin or other formation in position on the ball, pin or other connection during use of the implement.

The side rails may also be designed to support a jaw type hitch therebetween.

The present invention will now be described, by way of example only, with reference to the accompanying drawings in which;
Figure 1 shows a perspective view of a tractor rear hitch;
Figures 2, 3 and 4 show perspective, rear and part-sectional views of the basic frame of the hitch shown in Figure 1;
Figures 5 and 6 show perspective views in greater detail of implement connector mounting arrangements used in the hitch of Figures 2 to 4;
Figures 7 and 8 show examples of alternative forms of implement connector used in the hitch of figures 2 to 4;
Figures 9 to 14 show the attachment of an implement connector to the hitch frame;
Figure 15 shows a perspective view of a draw bar support means in accordance with the invention and associated latching pin which are also supported from the hitch of Figure 1;
Figures 16 and 17 show sectional views through the draw bar support means of Figure 15 showing how the draw bar latch pin is disengaged in accordance with the invention;
Figure 18 shows a further perspective view of a tractor hitch with a jaw type hitch also supported between the vertical rails of the hitch;
Figures 19 and 20 show perspective views of an alternative draw bar support and mounting plate arrangement; and
Figures 21 to 24 show details of a mounting plate arrangement for use with towing pins or towing balls.

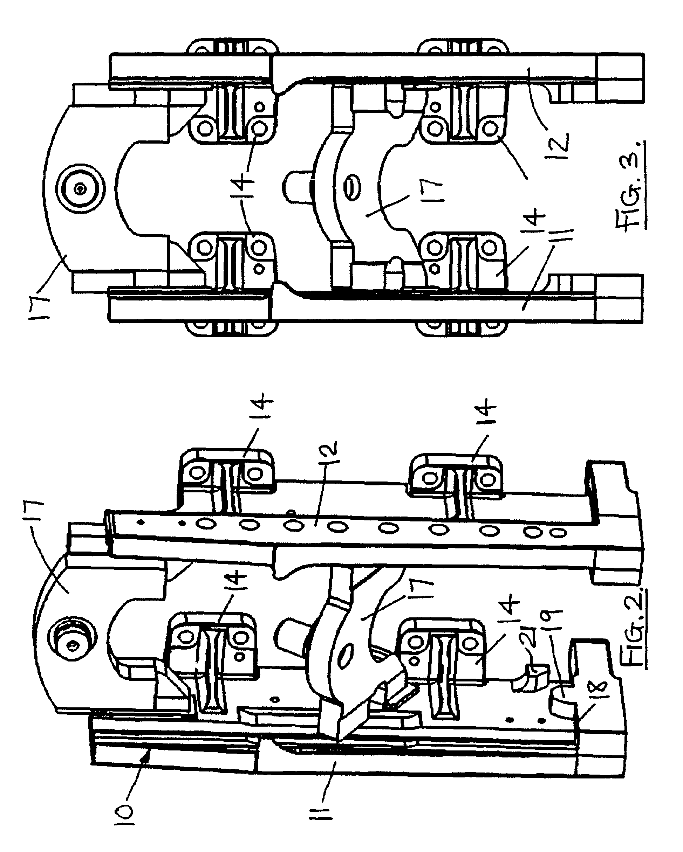

Referring to the drawings, the tractor rear hitch 10 comprises a pair of vertically extending spaced rails 11 and 12 which are secured to the rear of the tractor axle housing 13 by bolts extending through flanges 14. Supported between the rails 11 and 12 is an implement connector 15 which comprises a coupling pin 16 mounted on a plate 17 which is held in a generally horizontal position between the rails. Figures 2 to 6 show the basic rail structure in more detail. The plate 17 of the operative implement connector 15 is supported on a pair of generally horizontally extending upwardly facing support surfaces 18 which each carry a vertically upwardly extending projection 19 which extends into a corresponding cut out 20 provided at each end of the plate 17. Also mounted above each support surface 18 is a downwardly extending projection 21 which receives the plate 17 between its lower end 22 and the upper surface 18.

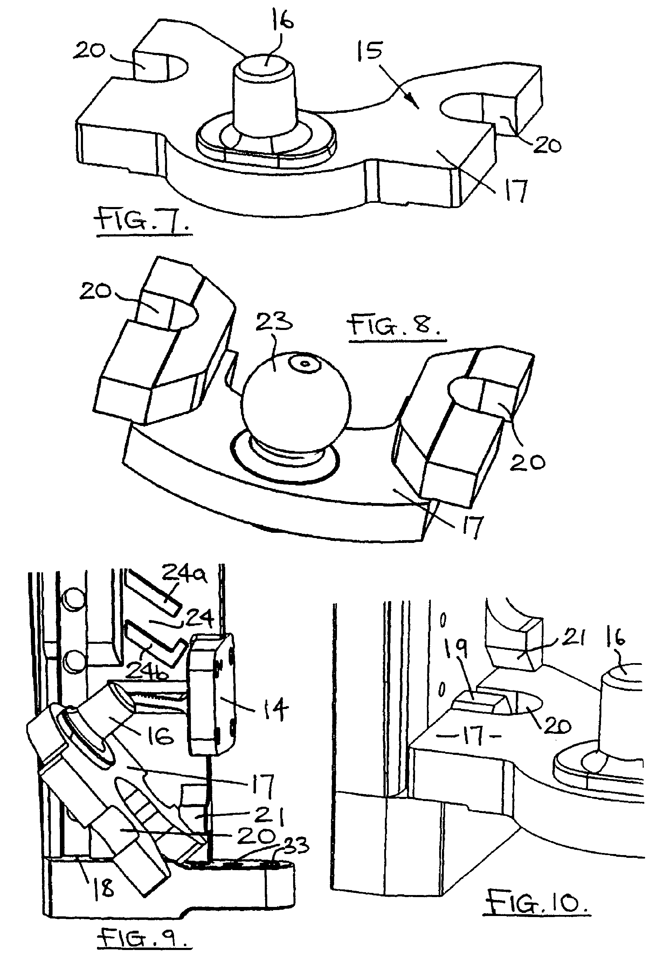

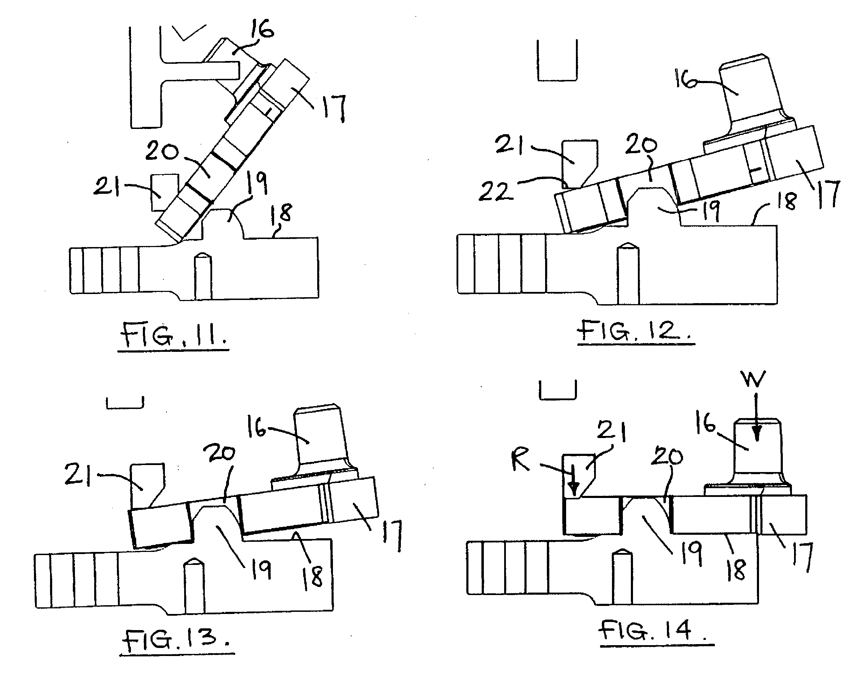

Figures 9 to 14 show the manner in which the plate 17 is inserted into its operational position on the support surfaces 18. The sequence of movements is best illustrated in Figures 11 to 14 where it can be seen that the plate 17 is locate between the projections 19 and 21 and then tipped downwardly so that the projections 19 enter the cut-outs 20 and the plate is trapped below the downwardly extending projections 21 so that when weight is applied to the pin 16, as indicated by the arrow W in Figure 14, this is reacted by the force illustrated by the arrow R so that the plate 17 does not tip on the support surfaces 18 and is held by horizontal movement on the support surfaces by the engagement of projections 19 in cut-outs 20. Thus it will be appreciated that it is an easy process to change the implement connector 15 as may be required if a different implement is to be towed by the tractor.

Figures 7 and 8 show, for example, two examples of alternative forms of implement connector 15. In figure 7 the simple pin 16 is used and in figure 8 a simple ball 23 is used. In the figure 8 arrangement the ball is mounted at a lower level than the portion of the plate 17 which contain the cut-outs 20. Such an arrangement allows the effective height of the implement coupling to be adjusted if this is necessary.

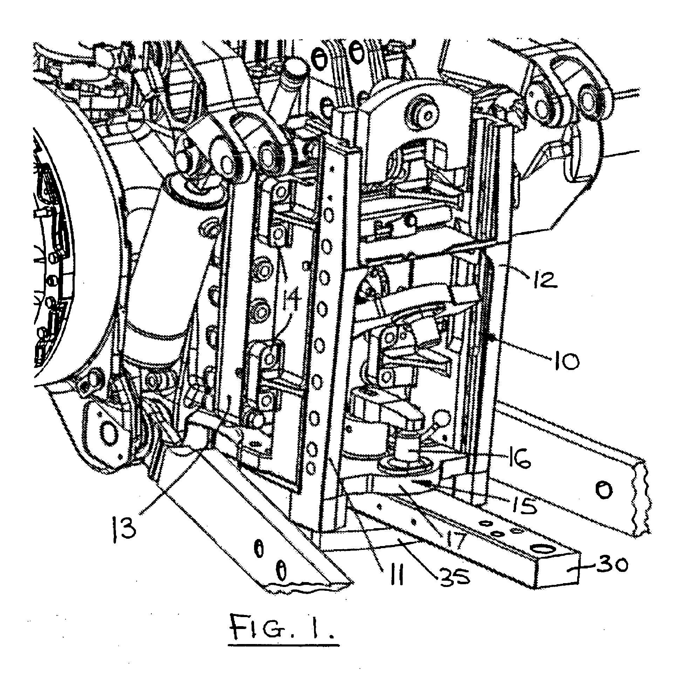

The side rails 11 and 12 are provide with pairs of slots 24 and 25 defined by ridges 24a, 24b and 25a, 25b between which the ends of the plates 17 of the implement connectors can be inserted so that non-operative implement connectors can be stowed between the rails of the hitch as shown , for example, in figures 1 to 4. Thus, for example, an operative implement may be supported on support surfaces 18 and two non-operative and alternative implement connectors store in the slots 24 and 25. Although in Figures 1 to 4 ridges 25a, 25b extend generally vertically they could, for example, extend generally parallel to ridges 24a, 24b to support another plate generally parallel to the lower plate 17 supported between ridges 24a,24b.

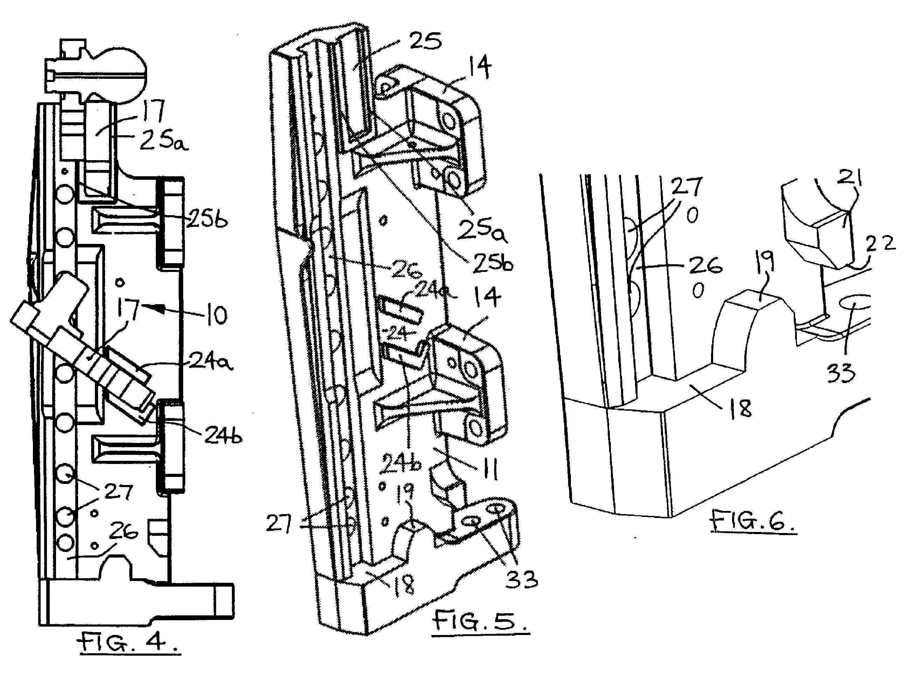

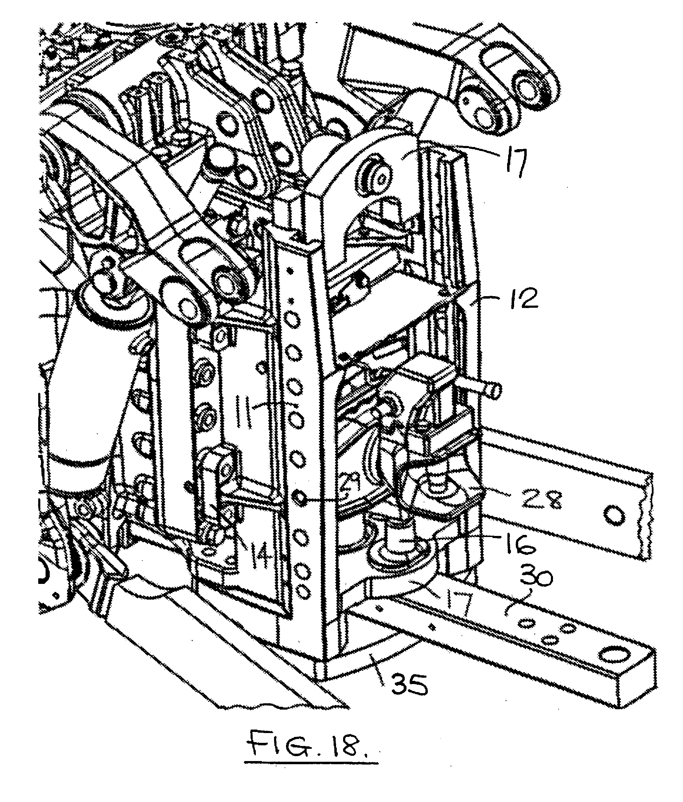

As can be seen from Figures 4 and 5 each side rail 11, 12 is provided with a vertical slot 26 containing a number of spaced holes 27. These slots are designed to accommodate the ends of a known type of jaw hitch 28 (shown in Figure 18) which has mounting pins 29 which engage the holes 27 to allow the height of the hitch relative to the side rails to be adjusted.

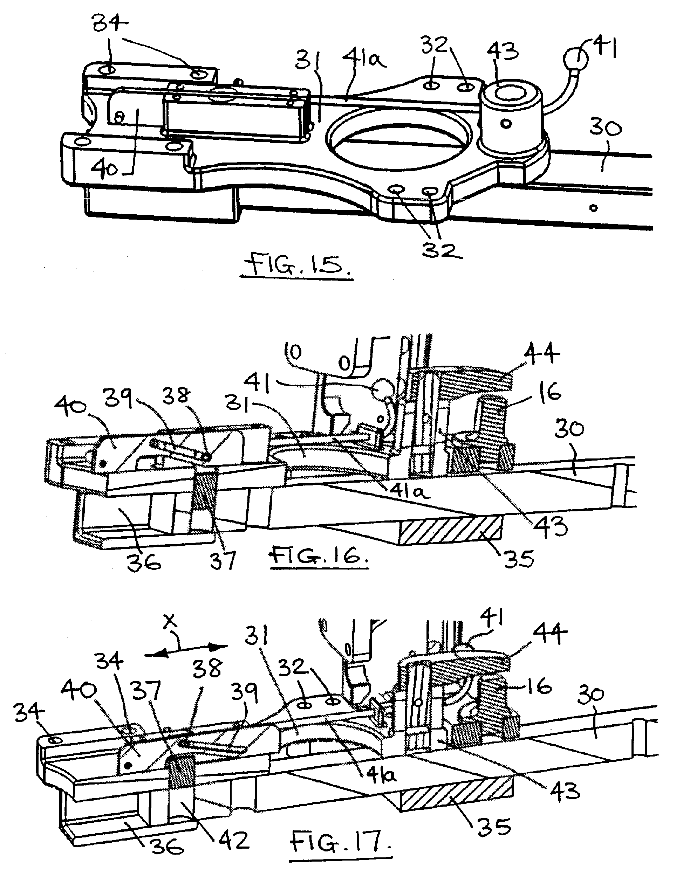

In addition to the jaw hitch 28 the tractor rear hitch can also support a draw bar 30 which is mounted on a draw bar support 31 (see Figures 15 to 17) which is in turn secured by bolts extending through holes 32 in support 31 and corresponding holes 33 at the bottom of the side rails 11 and 12 and best send in Figure 5. Additionally the draw bar support is supported by bolts which extend through holes 34 at the front end of the support and are screwed in to the underside of the tractor rear axle housing.

The draw bar 30 extends above a plate 35 secured to the lower ends of the rails 11 and into a socket 36 formed in the forward end of the draw bar support. The drawbar is locked to the draw bar support 31 by a pin 37 which is pinned at 38 into a cam slot 39 cut in a cam plate 40 which is moved in direction X of Figures 16 and 17 by a handle 41 which is accessible from the rear of the tractor hitch and which is connected with plate 40 by rod 41a. Thus in order to move the locking pin 37 vertically the handle 41 is pulled towards the rear of the tractor to move the cam plate 40 towards the rear of the tractor and thus cause the pinned connection 38 to move vertically in the cam track 39 thus raising the locking pin out of the operative hole 42 in the draw bar 30 which allows the draw bar to be easily removed from the tractor or to be positioned in a variety of different locations depending on the position of the operative aperture 42 which is engaged. As is well known the draw bar may also be reversible to cater for different sizes of draw bar hole etc.

The draw bar support 31 carries a hollow post 43 on which a keeper 44 is mounted. This keeper ensures that any implement connected with the associated pin 16 cannot disengage the pin when in use.

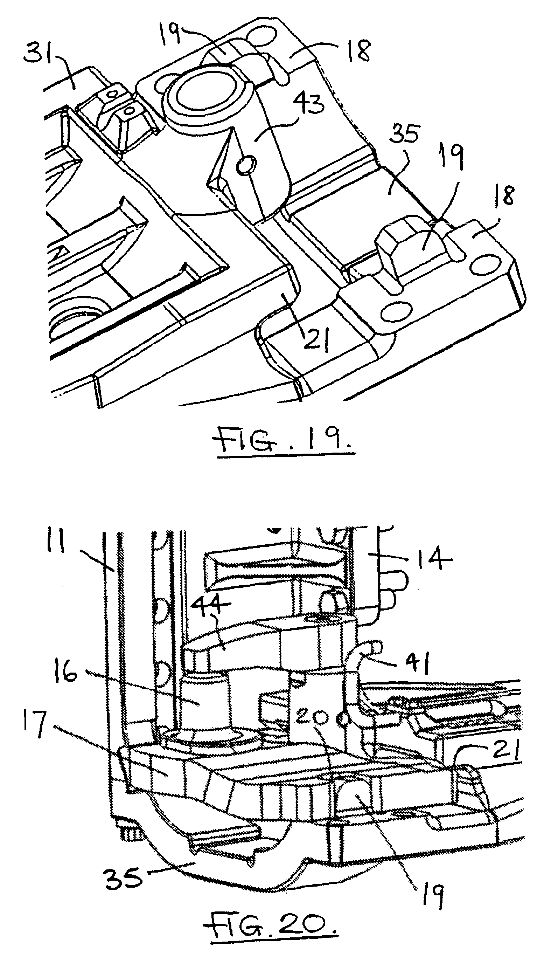

Figures 19 and 20 show an alternative form of draw bar support 31 in which the plate 17 is prevented from tipping during use of the pin 16 by a ledge 21 built into the support 31 which replaces the previously described projections 21. The ledge 21 overhangs the foremost edge of the plate 17. The projections 19 may be integral with the support 31 or formed separately and bolted or otherwise secured thereto. The projections 19 on the rails 11 and 12 may also be separately formed if desired.

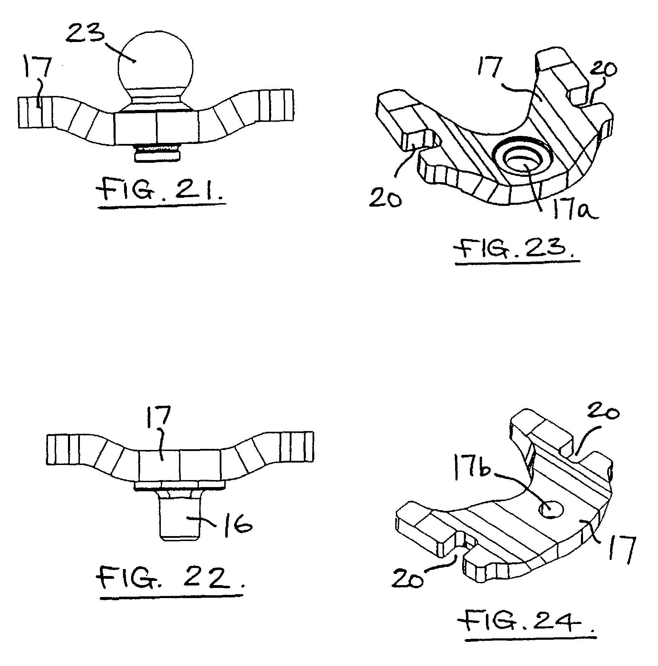

Figures 21 to 24 show views of how a standard plate 17 can be machined to accept either a pin 16 or coupling ball 23. As is clear from Figures 23 and 24 the only difference between the plates is the machining to take either a pin or ball. The hole 17a which receives the ball 23 is larger in diameter than the hole 17b which receives the pin 16.

As will be appreciated from the above a tractor rear hitch which enables a variety of different implement connectors to be easily mounted and removed therefrom and also provides a storage facility for non-operative implement connectors. Further the hitch allows the connection of a draw bar using a cam operated locking pin and also allows the use of a vertically slideable hitch jaw.

## Claims

1. A draw bar arrangement comprising a draw bar support means (31) secured to a tractor (13), and a draw bar (30) secured to the draw bar support means to extend in a generally fore and aft direction relative to the tractor, the draw bar (30) being secured to the support means (31) by a latch or pin (37) which engages an aperture (42) in the draw bar, **characterised in that** the latch or pin (37) is withdrawable from the aperture (42) by a cam means (38,39,40) which is moved by a handle (41) located rearwardly of the aperture and accessible from the rear of the tractor.

2. A rear hitch (10) for a tractor comprising a pair of vertically extending and laterally spaced rails (11,12) designed to be secured to the rear (13) of a tractor and an implement connector (15) secured between the rails for the attachment of an implement, the hitch further comprising a draw bar arrangement according to Claim 1, wherein the rails at least partially support the drawbar support means (31).

3. A hitch according to Claim 2 in which the connector (15) comprise a connecting ball, pin or other formation (16,23) mounted on a plate (17) designed to be supported between the rails (11,12) with the plate (17) in a generally horizontal orientation when in use.

4. A hitch according to Claim 3 in which one or more pairs of slots (24,25) are provided in the rails (11,12) into which the plates (17) of non-operative connectors (15) can be inserted for storage on the hitch.

5. A hitch according to Claim 3 or 4 in which a pair of generally horizontally extending upwardly facing support surfaces (18) are carried by the rails (11,12) to vertically support end portions of the plate (17) of an operative connector (15), and interengaging formations (19,20,21) are provided on the plate and carried by the rails to support the plate against horizontal movement and tipping movement relative to the support surfaces (18) when the ball, pin or other formation (16,23) on the plate is in use.

6. A hitch according to Claim 5 in which the interengaging formations comprise vertically upwardly extending projections (19) on the support surfaces (18) which engage cut-outs (20) in the ends of the plate (17) to support the plate against horizontal movement relative to the support surfaces, and vertically downwardly extending projections (21) located above and spaced from the support surfaces (18) to receive the plate (17) between the support surfaces and the lower ends (22) of the vertically downwardly extending projections.

7. A hitch according to any one of Claims 4 to 6 in which the draw bar support (31) is provided with a pair of generally horizontally extending upwardly facing support surfaces (18) to vertically support end portions of the plate (17) of an operative connector (15), and interengaging formations (19,20,21) are provided on the support (31) and plate (17) to support the plate (17) against horizontal movement and tipping movement relative to the support surfaces when the ball, pin or other formation (16,23) on the plate (17) is in use.

8. A hitch according to Claim 7 in which the interengaging formations comprise vertically upwardly extending projections (19) on the support surfaces (18) with engage cut-outs (20) in the ends of the plate (17) to support the plate against horizontal movement relative to the support surface and projections (21) on the support (31) which extend over a portion of the plate (17) to prevent tipping of the plate.

9. A hitch according to any one of Claims 3 to 8 in which the drawbar support means (31) carries a keeper (44) to hold any implement connected with the ball, pin or other formation (16,23) in position on the ball, pin or other connection during use of the implement.

10. A hitch according to any one of Claims 2 to 9 in which the side rails (11,12) are also designed to support a jaw type hitch (28) therebetween.

## Patentansprüche

1. Anhängerkupplungsanordnung mit einem Trag- oder Abstützorgan (31) für eine Zugstange oder Kupplung, wobei das Trag- oder Abstützorgan an einem Traktor oder Zugfahrzeug (13) befestigt oder gesichert ist und wobei in Zugstange oder Kupplung (30) mit Erstreckung grundsätzlich in eine Längsrichtung zu dem Zugfahrzeug oder Traktor an dem Trag- oder Abstützorgan befestigt oder gesichert ist und die Zugstange oder Kupplung (30) an dem Trag- oder Abstützorgan (31) durch ein Rast-, Sperr- oder Verriegelungselement oder einen Pin (37) befestigt oder gesichert ist, welche, welches oder welcher in eine öffnung (42) in der Zugstange oder Kupplung eingreift, **dadurch gekennzeichnet, dass** das Rast-, Sperr- oder Verriegelungselement oder der Pin (37) von der Öffnung (42) durch ein Nockenorgan (38, 39, 40) lösbar oder zurückziehbar ist, welches durch ein Handbetätigungsorgan (41) bewegt wird, welches hinter der Öffnung angeordnet ist und von der Rückseite des Zugfahrzeugs oder Traktors zugänglich ist.

2. Hintere Anbaueinrichtung (10) eines Zugfahrzeugs oder Traktors mit einem Paar von sich vertikal erstreckenden und lateral beabstandeten Bahnen oder Schienen (11, 12), die geeignet für eine Sicherung oder Befestigung an der Rückseite (13) eines Zugfahrzeugs oder Traktors gestaltet sind, und mit einem Anbaugerät-Verbindungselement (15), welches zwischen den Bahnen oder Schienen befestigt oder gesichert ist, um eine Befestigung eines Anbaugeräts zu ermöglichen, wobei die Anbaueinrichtung eine Anhängerkupplungsanordnung nach Anspruch 1 aufweist und die Bahnen oder Schienen zumindest teilweise das Trag- oder Abstützorgan (31) für die Zugstange oder Kupplung abstützen oder tragen.

3. Anbaueinrichtung nach Anspruch 2, wobei das Verbindungselement (15) eine verbindende Kugel, einen verbindenden Pin oder ein anderes Gebilde (16, 23) aufweist, der, die oder das an einer Platte (17) montiert ist, die geeignet gestaltet ist um zwischen den Schienen oder Bahnen (11, 12) getragen oder abgestützt zu werden, wobei sich die Platte (17) in einer grundsätzlich horizontalen Orientierung befindet, wenn diese in Gebrauch ist.

4. Anbaueinrichtung nach Anspruch 3, in der ein Paar oder mehrere Paare von Schlitzen (24, 25) in den Bahnen oder Schienen (11, 12) vorgesehen sind, in die die Platten (17) für eine Bevorratung auf oder an der Anbaueinrichtung bei nicht betriebenen oder wirksamen Verbindungselementen (15) eingesetzt werden können.

5. Anbaueinrichtung nach Anspruch 3 oder 4, wobei ein Paar von sich grundsätzlich horizontal erstreckenden, nach oben weisenden Tragflächen (18) von den Schienen oder Bahnen (11, 12) getragen werden, um Endbereiche der Platte (17) eines wirksamen Verbindungselements (15) vertikal abzustützen, und wobei ineinander eingreifende Ausbildungen (19, 20, 21) auf der Platte vorgesehen sind und durch die Schienen oder Bahnen getragen werden, um die Platte gegenüber einer horizontalen Bewegung und einer kippenden Bewegung gegenüber den Tragflächen (18) abzustützen, wenn die Kugel, der Pin oder das anderweitige Gebilde (16, 23) auf der Platte in Gebrauch ist.

6. Anbaueinrichtung nach Anspruch 5, wobei die ineinander eingreifenden Ausbildungen auf den Tragflächen (18) sich vertikal aufwärts erstreckende Vorsprünge (19) aufweisen, die in Ausschnitte (20) in den Enden der Platte (17) eingreifen, um die Platte gegen eine horizontale Bewegung gegenüber den Tragflächen abzustützen, sowie sich vertikal nach unten erstreckende Vorsprünge (21) aufweisen, die über und beabstandet von den Tragflächen (18) angeordnet sind, um die Platte (17) zwischen den Tragflächen und den unteren Enden (22) der sich vertikal nach unten Vorsprünge aufzunehmen.

7. Anbaueinrichtung nach einem der Ansprüche 4 bis 6. wobei das Trag- oder Abstützorgan (31) für die Kupplung oder Zugstange mit einem Paar von sich grundsätzlich horizontal erstreckenden, nach oben weisenden Tragflächen (18) ausgestaltet ist, um Endbereiche der Platte (17) für ein in wirksames Verbindungselement (15) vertikal und auf oder an dem Trag- oder Abstützorgan (31) und der Platte (17) ineinander eingreifende Ausbildungen (19, 20, 21) vorgesehen sind, um die Platte (17) gegenüber einer horizontalen Bewegung und einer kippenden Bewegung relativ zu den Tragflächen abzustützen, wenn der Ball, der Pin oder die anderweitige Ausbildung (16, 23) auf der Platte (17) in Gebrauch ist.

8. Anbaueinrichtung nach Anspruch 7, wobei die ineinander eingreifenden Ausbildungen auf den Tragflächen (18) sich vertikal nach oben erstreckende Vorsprünge (19) aufweisen, die in Ausschnitte (20) in den Enden der Platte (17) eingreifen, um die Platte gegen eine horizontale Bewegung gegenüber der Tragfläche abzustützen, und Vorsprünge (21) auf dem Trag- oder Abstützorgan (31) vorhanden sind, die sich über einen Bereich der Platte (17) erstrecken, um ein Kippen der Platte zu vermeiden.

9. Anbaueinrichtung nach einem der Ansprüche 3 bis 8, wobei das Trag- oder Abstützorgan (31) für die Zugstange oder Kupplung ein Halteelement (44) trägt, um ein beliebiges Anbaugerät während des Gebrauchs des Anbaugeräts in Verbindung mit dem Ball, dem Pin oder der anderweitigen Ausbildung (16, 23) in Position auf dem Ball, Pin oder der anderweitigen Verbindung zu halten.

10. Anbaueinrichtung nach einem der Ansprüche 2 bis 9, wobei die Seitenbahnen oder -schienen (11, 12) ebenfalls geeignet gestaltet sind, um eine backenartige Anbaueinrichtung (28) zwischen diesen zu halten.

## Revendications

1. Agencement de barre d'attelage comportant un moyen de support de barre d'attelage (31) fixé sur un tracteur (13), et une barre d'attelage (30) fixée sur le moyen de support de barre d'attelage de manière à s'étendre sensiblement dans une direction longitudinale par rapport au tracteur, la barre d'attelage (30) étant fixée sur le moyen de support (31) par un verrou ou broche (37) qui s'assemble dans une ouverture (42) sur la barre d'attelage, **caractérisé en ce que** le verrou ou broche (37) peut être retiré de l'ouverture (42) par un moyen à came (38, 39, 40) qui est déplacé par une poignée (41) située à l'arrière de l'ouverture et accessible depuis l'arrière du tracteur.

2. Crochet d'attelage arrière (10) pour un tracteur comportant une paire de rails s'étendant verticalement et espacés latéralement (11, 12) conçus de manière à être fixés sur l'arrière (13) d'un tracteur et un coupleur d'accessoire (15) fixé entre les rails afin d'assurer la fixation d'un accessoire, le crochet d'attelage comprenant, en outre, un agencement de barre d'attelage selon la revendication 1, dans lequel les rails supportent au moins partiellement le moyen de support de barre d'attelage (31).

3. Crochet d'attelage selon la revendication 2 dans lequel le coupleur (15) comprend une boule, une broche ou autre élément d'assemblage d'attache (16, 23) monté sur une plaque (17) conçue de manière à être supportée entre les rails (11, 12), la plaque (17) présentant une orientation sensiblement horizontale en cours utilisation.

4. Crochet d'attelage selon la revendication 3 dans lequel une ou plusieurs paires de fentes (24, 25) sont formées sur les rails (11, 12) dans lesquelles les plaques (17) de coupleurs inopérants (15) peuvent être insérées afin d'en assurer le stockage sur le crochet d'attelage.

5. Crochet d'attelage selon la revendication 3 ou 4 dans lequel une paire de surfaces de support orientées vers le haut et s'étendant sensiblement horizontalement (18) sont supportées par les rails (11, 12) afin de supporter verticalement des parties d'extrémité de la plaque (17) d'un coupleur opérationnel (15), et des éléments conjugues (19, 20, 21) sont agencés sur la plaque et supportés par les rails afin de supporter la plaque en empêchant un mouvement horizontal et un mouvement de basculement par rapport aux surfaces de support (18) lorsque la boule, la broche ou autre élément d'assemblage (16, 23) sur la plaque est en cours d'utilisation.

6. Crochet d'attelage selon la revendication 5 dans lequel les éléments d'assemblage conjugués comprennent des saillies s'étendant verticalement vers le haut (19) sur les surfaces de support (18) qui s'assemblent sur des découpes (20) sur les extrémités de la plaque (17) afin de supporter la plaque en empêchant un mouvement horizontal par rapport aux surfaces de support, et des saillies s'étendant verticalement vers le bas (21) situées au-dessus des surfaces de support (18) et espacées de celles-ci afin de recevoir la plaque (17) entre les surfaces support et les extrémités inférieures (22) des saillies s'étendant verticalement vers le bas.

7. Crochet d'attelage selon l'une quelconque des revendications 4 à 6 dans lequel le support de barre d'attelage (31) comporte une aire surfaces de support orientées vers le haut et s'étendant sensiblement horizontalement (18) afin de supporter verticalement des d'extrémité de la plaque (17) d'un coupleur opérationnel (18), et des éléments conjugues (19, 20, 21) sont formés sur le support (31) et la plaque (17) afin de supporter la plaque (17) en empêchant un mouvement horizontal et un mouvement de basculement par rapport aux surfaces de support lorsque la boule, broche ou autre élément d'assemblage (16, 23) sur la plaque (17) est en cours d'utilisation.

8. Crochet d'attelage selon la revendication 7 dans lequel les éléments d'assemblage conjugués comprennent des saillies s'étendant verticalement vers le haut (19) sur les surfaces de support (18) avec des découpes d'assemblage (20) sur les extrémités de la plaque (17) afin de supporter la plaque en empêchant un mouvement horizontal par rapport à la surface de support, et des saillies (21) sur le support (31) qui s'étendent au-dessus d'une partie de la plaque (17) de manière à empêcher le basculement de la plaque.

9. Crochet d'attelage selon l'une quelconque des revendications 3 à 8, dans lequel le moyen de support de barre d'attelage (31) supporte un élément de maintien (44) destiné à maintenir accessoire quelconque couplé à la boule, la broche ou autre élément d'assemblage (16, 23) en position sur la boule, broche ou autre élément de couplage au cours de l'utilisation de l'accessoire.

10. Crochet d'attelage selon l'une quelconque des revendications 2 à 9, dans lequel les rails latéraux (11, 12) sont aussi conçus afin de supporter un crochet d'attelage du type à mâchoire (28) entre eux.
